# EUROPÄISCHE PATENTANMELDUNG

(11) **EP 1 900 271 A1**
(43) Veröffentlichungstag der Anmeldung: **19.03.2008**
(21) Anmeldenummer: 07120697.3
(22) Anmeldetag: 22.05.2006
(51) Int. Cl.: A01B 59/043, A01B 59/06

(54) **Dreipunkt-Geräteanbau für einen zum Wein- und/oder Obstbau dienenden Traktor**

(30) Priorität: 23.05.2005 DE 102005023730
(62) Teilanmeldung aus: 06114335.0
(71) Anmelder: Deere & Company, Moline, IL 61265-8098 (US)
(72) Erfinder: Heitlinger, Martin, 76684, Östringen (DE)
(74) Vertreter: Bradl, Joachim

(57) **Zusammenfassung**

Die Erfindung betrifft einen Dreipunkt-Geräteanbau für einen zum Wein- und/oder Obstbau dienenden Traktor. Der Dreipunkt-Geräteanbau (10) umfasst einen Oberlenker und zwei Unterlenker (12, 14). Ein Ende des Oberlenkers ist in einem oberen mittleren Bereich des Dreipunkt-Geräteanbaus gelenkig an einer traktorseitigen Verbindungsstelle (16) mit dem Traktor verbunden. Ein Ende (18, 64) eines Unterlenkers (12, 14) ist in einem unteren Bereich des Dreipunkt-Geräteanbaus (10) an einer traktorseitigen Verbindungsstelle (22) gelenkig mit dem Traktor verbunden. Es soll eine vereinfachte Konstruktion eines aus dem Stand der Technik bekannte Dreipunkt-Geräteanbaus mit nahezu gleichen Wirkungsweisen vorzugsweise kostengünstiger dargestellt werden. Hierzu wird vorgeschlagen, die beiden traktorseitigen Verbindungsstellen (22) der Unterlenker (12, 14) in räumlicher Nähe beieinander angeordnet sind.

## Beschreibung

Die Erfindung betrifft einen Dreipunkt-Geräteanbau für einen zum Wein- und/oder Obstbau dienenden Traktor. Der Dreipunkt-Geräteanbau umfasst einen Oberlenker und zwei Unterlenker. Ein Ende des Oberlenkers ist an einem oberen mittleren Bereich des Dreipunkt-Geräteanbaus gelenkig an einer traktorseitigen Verbindungsstelle mit dem Traktor verbunden. Ein Ende eines Unterlenkers ist an einem unteren Bereich des Dreipunkt-Geräteanbaus an einer traktorseitigen Verbindungsstelle gelenkig mit dem Traktor verbunden.

Dreipunkt-Geräteanbauten der eingangs genannten Art sind seit langem aus dem Stand der Technik bekannt. Lediglich beispielhaft wird auf die DIN Norm ISO 730-1 hingewiesen, in welcher die Abmessungen und Anforderungen eines Dreipunkt-Geräteanbaus für den Anbau von Geräten oder Ausrüstungen an das Heck landwirtschaftlicher Traktoren beschriebenen sind.

Im Wein- und Obstanbau, ganz allgemein bei Raumkulturen, werden besondere Anforderungen an einen Dreipunkt-Geräteanbau gestellt, die sich vom normalen Anwendungsbereich von Ackerbautraktoren unterscheiden. Traktoren welche in Raumkulturen eingesetzt werden, fahren in der Regel durch mehr oder weniger schmale Reihen und weisen daher eine geringe Spur (z.B. 960 mm) auf. Die Arbeit wird oft an steilen und schrägen Hanglagen durchgeführt. Das erfordert einen Dreipunkt-Geräteanbau, mit welchem ein an den Traktor angekoppeltes Arbeitsgerät in gewissen Grenzen räumlich ausgerichtet werden können. Vorzugsweise wird dies vom Bediener vom Traktorsitz aus unterstützt vom Hydrauliksystem des Traktors eingestellt. Insbesondere besteht die Notwendigkeit beim Durchfahren einer Reihe im Weinberg, das Arbeitsgerät bewusst zur Reihe hin oder von der Reihe weg zu bewegen, und zwar grundsätzlich auf zweierlei unterschiedliche Weisen: einerseits wird mit Hilfe des Dreipunkt-Geräteanbaus das Arbeitsgerät um eine im Wesentlichen vertikal angeordnete Schwenkachse seitlich zu einer Reihe hin oder von einer Reihe weggeschwenkt. Diese Bewegung wird auch im Englischen mit "lateral sway" oder "row guiding" bezeichnet. Andererseits wird mit Hilfe des Dreipunkt-Geräteanbaus das Arbeitsgerät um eine im Wesentlichen horizontal angeordnete Achse verkippt oder verschwenkt. Diese Bewegung wird im Englischen auch mit "vertical sloping" oder "row side to side" bezeichnet.

Ein speziell ausgebildeter Dreipunkt-Geräteanbau, mit welchem die zwei soeben beschriebenen Arbeitsgerätebewegungen relativ zum Traktor ausführbar sind, ist durch die EP 0 259 801 A1 aus dem Stand der Technik bekannt. Bei diesem Dreipunkt-Geräteanbau sind die dort vorgesehenen beiden Unterlenker starr miteinander verbunden und bilden im Wesentlichen eine U-Form. Ein gleichzeitiges Verkippen der beiden Unterlenker zum Anheben oder Absenken ist mit zwei Hubzylindern möglich. Eine Ausführung einer "lateral sway"-Bewegung der beiden Unterlenker ist mit zwei hierzu speziell vorgesehenen und angeordneten Kurzhubzylindern möglich. Eine Ausführung einer "vertical sloping"-Bewegung der beiden Unterlenker ist mit zwei weiteren hierzu speziell vorgesehenen und angeordneten Kurzhubzylindern möglich.

Dieser Dreipunkt-Geräteanbau stellt eine aufwendige und somit teuere Konstruktion dar. Hierbei werden hohe Anforderungen an die einzelnen Bauteile gestellt, insbesondere an die Kurzhubzylinder. Dies äußert sich in einem hohen Verschleiß der betroffenen Bauteile.

Der vorliegenden Erfindung liegt daher die Aufgabe zugrunde, einen Dreipunkt-Geräteanbau der eingangs genannten Art anzugeben und weiterzubilden, durch welchen die vorgenannten Probleme überwunden werden. Insbesondere soll eine vereinfachte Konstruktion mit nahezu gleichen Wirkungsweisen vorzugsweise kostengünstiger dargestellt werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Dreipunkt-Geräteanbau der eingangs genannten Art dadurch gekennzeichnet, dass die beiden traktorseitigen Verbindungsstellen der Unterlenker in räumlicher Nähe beieinander angeordnet sind.

Erfindungsgemäß ist zunächst erkannt worden, dass für den erfindungsgemäßen Dreipunkt-Geräteanbau Bauteile verwendet werden können, die grundsätzlich mit den Bauteilen vergleichbar sind, die ein herkömmlicher Dreipunkt-Geräteanbau gemäß DIN Norm ISO 730-1 umfasst. So sind einerseits die beiden Unterlenker in ihrer Ausrichtung getrennt voneinander verstellbar angeordnet. Es ist also nicht zwingend erforderlich, dass die beiden Unterlenker - wie aus der EP 0 259 801 A1 bekannt - eine U-Form aufweisen und starr miteinander verbunden sind. Dadurch dass die beiden Unterlenker traktorseitig an in räumlicher Nähe beieinander angeordneten Verbindungsstellen angelenkt sind, ist eine Bewegung der beiden Unterlenker mit angekoppeltem Arbeitsgerät um eine im Wesentlichen vertikal angeordnete Schwenkachse möglich, um nämlich das Arbeitsgerät zu einer Reihe hin oder von einer Reihe wegzuschwenken. Mit anderen Worten ist eine Bewegung im Sinn des "lateral sway" bzw. "row guiding" möglich. Die im Wesentlichen vertikal angeordnete Schwenkachse wird dann durch die Lage der traktorseitigen Verbindungsstellen für die Unterlenker definiert. Im einfachsten Fall könnte dementsprechend ein Unterlenker im Wesentlichen eine geradlinige Form aufweisen. In einem am Traktor angebauten Zustand würden sich dann die beiden Unterlenker von den traktorseitigen Verbindungsstellen im Wesentlichen V-förmig divergierend zu einem am Traktor ankoppelbaren Arbeitsgerät erstrecken. Insoweit können nahezu identische Bauteile eines herkömmlichen Dreipunkt-Geräteanbaus verwendet werden, so dass ein Dreipunkt-Geräteanbau speziell für die Anforderungen im Obst- und Weinanbau in ganz besonders vorteilhafter Weise kostengünstig und wirtschaftlich dargestellt werden kann.

Bei dem aus dem Stand der Technik gemäß EP 0 259 801 A1 bekannten Dreipunkt-Geräteanbau ist der Dreh- bzw. Schwenkpunkt um die im Wesentlichen vertikal angeordnete Schwenkachse zum Ausführen von "lateral sway" bzw. "row guiding"- Bewegungen weiter vorne am Traktor, nahe der Traktorhochachse, angeordnet, so dass ein Schwenkwinkel bezogen zur Traktorlängsachse von ca. 4 bis 5 Grad mit dem Dreipunkt-Geräteanbau erzielbar ist. Wollte man etwas vergleichbares mit einem herkömmlichen Dreipunkt-Geräteanbau gemäß DIN Norm ISO 730-1, also mit traktorseitig weit voneinander beabstandeten Verbindungsstellen für die Unterlenker, erreichen, so käme man lediglich auf einen Schwenkwinkel von ungefähr 2 Grad. Dadurch, dass die traktorseitigen Verbindungsstellen für die Unterlenker in räumlicher Nähe zueinander angeordnet sind, kann in ganz besonders vorteilhafter Weise ebenfalls eine Schwenkwinkel von ca. 4 Grad erzielt werden.

Grundsätzlich ist es denkbar, die traktorseitigen Verbindungsstellen für die Unterlenker unmittelbar benachbart zueinander anzuordnen. Dementsprechend befindet sich zwischen den beiden Verbindungsstellen kein Gehäuse oder kein Rahmenteil des Traktors. Die Gelenkverbindung des einen Unterlenkers könnte unmittelbar die Gelenkverbindung des anderen Unterlenkers berühren. Dementsprechend wären die Verbindungsstellen nicht weiter als ca. 10 cm voneinander beabstandet, in Abhängigkeit der Materialdicke der Unterlenker an den Verbindungsstellen. Hinsichtlich der Wirkungsweise des erfindungsgemäßen Dreipunkt-Geräteanbaus wirken die beiden Verbindungsstellen für die Unterlenker bei einer Bewegung des "lateral sway" bzw. "row guiding" im Wesentlichen wie eine einzelne, gemeinsame Verbindungsstelle. Die tatsächliche Anordnung der traktorseitigen Verbindungsstellen hängt jedoch im Allgemeinen von der konkreten Konfiguration bzw. Ausgestaltung des Traktors bzw. des Fahrwerks ab. Daher ist in einer bevorzugten Ausführungsform vorgesehen, dass der Abstand der traktorseitigen Verbindungsstellen der Unterlenker nicht größer als 20% des Radabstands des Traktors ist. Vorzugsweise beträgt der Abstand der traktorseitigen Verbindungsstellen der Unterlenker im Wesentlichen 10% des Radabstands des Traktors.

In einer ganz besonders bevorzugten Ausführungsform wird der Abstand der traktorseitigen Verbindungsstellen der Unterlenker derart gewählt, dass der horizontale Konvergenzabstand einen vorgebbaren Wert aufweist, bei welchem einerseits ein seitliches Ausschwenken eines am Traktor angekoppelten Arbeitgeräts möglich ist und andererseits eine vorgebbare seitliche Führung des Arbeitgeräts vorliegt. Der horizontale Konvergenzabstand hat große Bedeutung für die horizontale Stabilität des am Traktor angekoppelten Arbeitsgeräts und erstreckt sich von den arbeitsgeräteseitigen Ankoppelstellen des Arbeitsgeräts bis zu einem Konvergenzpunkt. Der Konvergenzpunkt ergibt sich als Schnittpunkt der Verlängerung der zwei Unterlenkerlängsachsen bzw. als Schnittpunkt der Verlängerung der Verbindungsstrecken zwischen den arbeitsgeräteseitigen Ankoppelstellen der Unterlenker und den traktorseitigen Anlenkstellen der Unterlenker. Falls der horizontale Konvergenzabstand zu groß ist, ist die seitliche Stabilität von richtungsunabhängigen Geräten vermindert, so dass beispielsweise Pflüge eine unebene und gekrümmte erste Furche bewirken. Falls der horizontale Konvergenzabstand zu klein ist, finden richtungsunabhängige Geräte - beispielsweise Eggen - leicht stabile Positionen, etwa asymmetrisch zum Traktor. Für viele Geräte, insbesondere lange mehrreihige, führt dies zu einer schlechteren Arbeitsqualität. Falls die beiden traktorseitigen Verbindungsstellen unmittelbar beieinander angeordnet sind, ist der Konvergenzpunkt, um welchen ein an den Traktor angekoppeltes Arbeitsgerät in horizontaler Richtung seitlich Ausschwenken kann, im Wesentlichen am Ort der beiden traktorseitigen Verbindungsstellen angeordnet. Falls die beiden traktorseitigen Verbindungsstellen etwas oder weiter voneinander beabstandet angeordnet sind, wird hierdurch der Konvergenzpunkt - in Richtung der Traktorlängsachse - weiter nach vorne verlagert und somit der horizontale Konvergenzabstand - verglichen zur unmittelbar benachbarten Anordnung der traktorseitigen Verbindungsstellen - vergrößert.

Im Konkreten könnten die traktorseitigen Verbindungsstellen der Unterlenker in einem Bereich nahe der Traktorlängsebene und/oder an einem Rahmen- oder Gehäuseteil des Traktors an einem unteren Bereich angeordnet sein. Unter der Traktorlängsebene ist in diesen Zusammenhang die Ebene zu verstehen, die von der Traktorlängsachse und der Vertikalen aufgespannt wird. Dementsprechend sind die Verbindungsstellen in einem mittleren Bereich zwischen den Rädern des Traktors angeordnet, beispielsweise mittig zwischen den Hinterrädern. Als Gehäuse, an welchem die Verbindungsstellen angeordnet sein können, würde sich beispielsweise das Differenzialgehäuse des Traktors eignen, an welchem üblicherweise die Komponenten herkömmlicher Dreipunkt-Geräteanbauten angeordnet bzw. angelenkt sind. Vorzugsweise sind die traktorseitigen Verbindungsstellen nahe der Traktorachse, insbesondere nahe der Hinterachse, angeordnet. Bei der Festlegung, wo die traktorseitigen Verbindungsstellen anzuordnen sind, kann auch der Aspekt einer optimalen Krafteinleitung des Arbeitsgeräts auf den Traktor eine wichtige Rolle spielen.

Zum räumlichen Ausrichten der zwei Unterlenker ist mindestens ein Aktuator vorgesehen. Jedem Unterlenker könnte ein Aktuator zugeordnet sein, mit welchem der jeweilige Unterlenker unabhängig von dem anderen Unterlenker in seiner räumlichen Ausrichtung veränderbar ist. Mit anderen Worten könnte ein solcher Aktuator im Sinn einer längenverstellbaren Hubstrebe wirken, wobei mit dem Aktuator hauptsächlich ein Verschwenken bzw. Verdrehen des Unterlenkers um eine im Wesentlichen horizontal angeordnete Achse - definiert durch die traktorseitige Verbindungsstelle - möglich ist.

In einer ganz besonders bevorzugten Ausführungsform ist an jedem Unterlenker eine Verbindungsstelle für eine Hubstrebe vorgesehen, welche derart ausgebildet ist, dass zwischen Hubstrebe und Unterlenker eine Gelenkverbindung gebildet ist. Die Gelenkverbindung ist derart ausgebildet, dass sie eine Drehbewegung des Unterlenkers relativ zur Hubstrebe um eine Drehachse quer zur Unterlenkerlängsachse ermöglicht. Weiterhin könnte vorgesehen sein, dass die Gelenkverbindung auch eine weitere Drehbewegung um die Unterlenkerlängsachse des Unterlenkers relativ zur Hubstrebe ermöglicht. Im Konkreten könnte die Gelenkverbindung durch ein gabelförmig ausgebildetes Ende einer Hubstrebe gebildet sein, das den Unterlenker von beiden Seiten her umgreift, wobei das gabelförmige Ende der Hubstrebe und der Unterlenker eine Bohrung aufweist, durch welche sich ein Bolzen erstreckt.

In einer weiter bevorzugten Ausführungsform ist traktorseitig ein Hubarm mit mindestens einer Verbindungsstelle für eine Hubstrebe vorgesehen. Eine Hubstrebe ist mit ihrem einen Ende an einer Verbindungsstelle des Hubarms und mit ihrem anderen Ende an einer Verbindungsstelle für die Hubstrebe eines Unterlenkers angelenkt. Der Hubarm ist mit mindestens einem Aktuator bewegbar. Der Aktuator könnte beispielsweise in Form eines Hydraulikzylinders ausgebildet sein. Bevorzugt könnten zwei seitlich angeordnete Hubarme vorgesehen sein, die starr an einer am Traktor drehbar gelagerten Welle befestigt sind. Mit Hilfe von zwei ebenfalls seitlich angeordneten Aktuatoren könnten die Hubarme um die Welle gedreht bzw. verschwenkt werden, wodurch die zwei Unterlenker gleichmäßig in ihrer räumlichen Orientierung verändert werden können.

In einer ganz besonders bevorzugten Ausführungsform ist die für eine Hubstrebe vorgesehene Verbindungsstelle eines Unterlenkers im Wesentlichen dort am Unterlenker angeordnet, wo die Verbindungslinie zwischen der traktorseitigen Verbindungsstelle des Unterlenkers und einer Ankopplungsstelle des Unterlenkers für ein Arbeitsgerät verläuft. Diese Anordnung der Verbindungsstelle für die Hubstrebe am Unterlenker bewirkt, dass durch das vom Dreipunkt-Geräteanbau aufzunehmende Gewicht des Arbeitsgeräts kein Drehmoment in eine Hubstrebe eingeleitet wird, so dass in vorteilhafter Weise die Hubstrebe im Lauf der Zeit nicht einem Verschleiß bzw. einer Deformation ausgesetzt ist, wie sie bei herkömmlichen Dreipunkt-Geräteanbauten in der Praxis beobachtet wurden. In Abhängigkeit der konkreten Ausführung des Unterlenkers wird hierdurch allerdings nicht vermieden, dass aufgrund des Gewichts des Arbeitsgeräts ein Drehmoment in den Unterlenker selbst eingeleitet wird. Dies führt jedoch nicht zu derartigen Verschleißerscheinungen, eine entsprechend stabile Ausführung des Unterlenkers selbst nebst entsprechend dimensionierte traktorseitige Verbindungsstelle für den Unterlenker vorausgesetzt.

Ganz besonders bevorzugt ist mindestens eine Hubstrebe längenverstellbar ausgeführt. Vorzugsweise erfolgt eine Längenverstellung einer Hubstrebe motorisch oder druckmittelbetrieben. Demgemäß weist die Hubstrebe eine Aktuatorfunktion auf. Hierfür könnte beispielsweise ein Hydraulikzylinder vorgesehen sein, der einfach- oder doppelwirkend hydraulisch angesteuert wird. Somit kann mit einer längenverstellbar ausgeführten Hubstrebe der jeweils ihr zugeordnete Unterlenker getrennt von dem anderen Unterlenker bewegt bzw. betätigt werden.

Grundsätzlich sind mehrere Alternativen denkbar, wie die Hubstreben konkret in Zusammenwirkung mit den Unterlenkern ausgebildet sein können. So könnte beispielsweise als Hubstrebe für einen Unterlenker ein doppelwirkender Aktuator vorgesehen sein, der beipielsweise in Form eines Hydraulikzylinders ausgeführt sein könnte. Für den anderen Unterlenker könnte eine Hubstrebe vorgesehen sein, die starr oder manuell in ihrer Länge verstellbar ausgebildet sein könnte, im Betrieb jedoch als nicht in ihrer Länge verstellbare Hubstrebe wirken soll. Bei dieser Alternative könnten beide Unterlenker mit Hilfe der beiden Hubarme, der Hubwelle und der Hubzylinder gemeinsam nach oben beziehungsweise nach unten geschwenkt werden. Mit dem doppelwirkenden Aktuator als eine Hubstrebe könnte der dieser Hubstrebe zugeordnete Unterlenker unabhängig von dem anderen Unterlenker nach oben oder nach unten geschwenkt werden, so dass die arbeitsgeräteseitigen Endpunkte der Unterlenker eine unterschiedliche Vertikalposition einnehmen können, wodurch eine "vertical sloping"-Bewegung des Arbeitsgeräts möglich ist.

In einer hierzu alternativen Ausführungsform ist als Hubstrebe für jeden Unterlenker ein einfachwirkender Aktuator vorgesehen, der ebenfalls in Form eines Hydraulikzylinders ausgebildet sein kann. Der Aktuator wirkt derart, dass er aktiv die Hubstrebe verkürzt, wodurch der zugeordnete Unterlenker nach oben bewegt wird. Ein Absenken des Unterlenkers kann durch Deaktivierung des Aktuators bzw. durch Drucklos-Schalten des Hydraulikzylinders erzielt werden, was aufgrund des Gewichts des Arbeitsgeräts von selbst bewirkt wird. Hierdurch können beide Unterlenker unabhängig voneinander von ihrem jeweils vorgesehenen Aktuator bzw. von ihrer jeweils vorgesehenen Hubstrebe in ihrer räumlichen Orientierung verändert werden. Hierbei können jedoch die beiden Unterlenker auf eine größere Vertikale Höhendifferenz eingestellt werden, wodurch der Schwenkwinkel eines Arbeitsgeräts um eine im Wesentlichen horizontal angeordnete Schwenkachse - zur Ausführung einer "vertical sloping"-Bewegung - vergrößert werden kann. Auch können durch das gemeinsame Verkürzen bei der Aktuatoren die zwei Unterlenker in eine noch höhere Position gebracht werden, was bei einigen Arbeitsgeräten bzw. Anwendungen wünschenswert ist.

Weiterhin ist es denkbar, dass als Hubstrebe für jeden Unterlenker ein doppelwirkender Aktuator vorgesehen ist. Auch diese Aktuatoren könnten in Form von Hydraulikzylindern ausgeführt sein. Hiermit kann man eine vergleichbare Wirkung zu der soeben ausgeführten Alternative erzielen.

In einer ganz besonders bevorzugten Ausführungsform ist mindestens ein längenverstellbares - vorzugsweise motorisch oder druckmittelbetriebenes - Stabilisatorelement vorgesehen. Das Stabilisatorelement ist einenends an einer traktorseitigen Verbindungsstelle und anderenends an einer Verbindungsstelle an einem Unterlenker anordenbar. Die Verbindungsstellen des Stabilisatorelements weisen ebenfalls mindestens ein, vorzugsweise zwei Freiheitsgrade auf. Mit dem oder den Stabilisatorelementen kann das Arbeitsgerät um eine im Wesentlichen vertikal angeordnete Schwenkachse zu einer Reihe hin oder von einer Reihe weggeschwenkt, also eine "lateral sway"-Bewegung bewirkt werden.

Es könnte vorgesehen sein, dass lediglich einem Unterlenker ein Stabilisatorelement zugeordnet ist. Ein solches Stabilisatorelement weist zweckmäßigerweise einen doppelwirkenden Aktuator bzw. Hydraulikzylinder auf, wodurch der Unterlenker in zwei entgegengesetzte Richtungen bewegbar ist. Alternativ und bevorzugte ist jedem Unterlenker jeweils ein Stabilisatorelement zugeordnet. Bei einem solchen Stabilisatorelement könnte es sich um einen einfachwirkenden Aktuator bzw. Hydraulikzylinder handeln. Die beiden Stabilisatorelemente sind zweckmäßigerweise derart angeordnet, dass mit dem einen Stabilisatorelement ein an dem Dreipunkt-Geräteanbau angekoppeltes Arbeitsgerät nach rechts und mit dem anderen Stabilisatorelement das Arbeitsgerät nach links verschwenkt werden kann.

Eine traktorseitige Verbindungsstelle eines Unterlenkers und/oder eines Oberlenkers weist eine Gelenkverbindung mit mindestens zwei Freiheitsgraden auf, mit welcher beispielsweise eine Kippbewegung des Unterlenkers bzw. des Oberlenkers um eine im Wesentlichen horizontal angeordnete Kippachse und eine Schwenkbewegung des Unterlenkers bzw. des Oberlenkers um eine im Wesentlichen vertikal angeordnete Schwenkachse ausführbar ist. Zur Realisierung solcher Gelenkverbindungen kann auf die im Stand der Technik bekannten Gelenkverbindungen zurückgegriffen werden.

Falls der Dreipunkt-Geräteanbau am Heck des Traktors angeordnet ist könnten die traktorseitigen Verbindungsstellen der Unterlenker bezüglich der Traktorlängsachse weiter vorne angeordnet sein als die traktorseitige Verbindungsstelle des Oberlenkers. Hierdurch kann der maximal erzielbare Schwenkwinkel für eine "lateral sway"-Bewegung noch weiter vergrößert werden.

Grundsätzlich weist ein zum Wein- und/oder Obstbau dienender Traktor eine geringe Spurweite auf, beispielsweise ca. 1 m. Da der erfindungsgemäße Dreipunkt-Geräteanbau üblicherweise am Heck des Traktors angebracht ist und dort das Gehäuse für das Achsdifferenzial sowie die Räder mit der relativ geringen Spurweite angeordnet sind, wird es in der Regel erforderlich sein, den Unterlenker des erfindungsgemäßen Dreipunkt-Geräteanbaus derart auszubilden, dass er an die vorliegenden Platzverhältnisse angepasst ist. Hierzu ist in einer bevorzugten Ausführungsform vorgesehen, dass ein Unterlenker in seinem dem Traktor zugewandten Ende einen ersten Bereich mit einer ersten Längsachse aufweist, welcher im am Traktor angebauten Zustand im wesentlichen parallel zur Traktorlängsebene orientiert ist. An den ersten Bereich des Unterlenkers schließt sich ein zweiter Bereich mit einer zweiten Längsachse des Unterlenkers an. Die erste Längsachse und die zweiten Längsachse sind in einem Winkel zueinander angeordnet, vorzugsweise derart, dass im angebauten Zustand der beiden Unterlenker bezüglich der traktorseitigen Verbindungsstelle die zweiten Bereiche der beiden Unterlenker divergieren. Der zweite Bereich ist daher bevorzugt geradlinig ausgebildet, könnte jedoch auch eine Krümmung oder eine Kurvenform aufweisen.

An den zweiten Bereich des Unterlenkers schließt sich ein dritter Bereich des Unterlenkers mit einer dritten Längsachse an, welcher im am Traktor angebauten Zustand im wesentlichen parallel zur Traktorlängsebene orientiert ist. An den zweiten oder dritten Bereich des Unterlenkers schließt sich ein weiterer Bereich des Unterlenkers mit einer weiteren Längsachse an. Der weitere Bereich des Unterlenkers ist derart ausgebildet, dass im am Traktor angebauten Zustand des Unterlenkers die weitere Längsachse im Wesentlichen quer - und vorzugsweise im Wesentlichen horizontal - zur Traktorlängsachse orientiert ist. Somit ist ein Unterlenker derart geformt, dass er von der im Bereich der Traktorlängsebene angeordneten traktorseitigen Verbindungsstelle des Unterlenkers sich nach hinten und zur Seite erstreckt, so dass arbeitsgeräteseitige Schnittstellenmittel, beispielsweise Unterlenkerfanghaken, hinter den Hinterrädern angeordnet sind.

Wie bereits angedeutet, sind arbeitsgeräteseitige Schnittstellenmittel vorgesehen, die derart ausgebildet sind, dass sie auf verschiedene Anbaugerätekategorien anpassbar sind. Hierzu könnte der Unterlenker in seinem vierten bzw. weiteren Bereich - das dem Arbeitsgerät zugewandte Ende des Unterlenkers - ein Langloch aufweisen, so dass ein Schnittstellenmittel das an dem weiteren Bereich angebracht ist, in mindestens einer Richtung verschoben bzw. positioniert und fixiert werden kann.

Es könnten Unterlenker unterschiedlicher Form vorgesehen sein, mit welchen beispielsweise der erfindungsgemäße Dreipunkt-Geräteanbau an die Verwendung unterschiedlicher Räder des Traktors angepasst werden können. Demgemäß ist ein solcher Unterlenker für einen Dreipunkt-Geräteanbau nach einem der Ansprüche 1 bis 21, dadurch gekennzeichnet, dass der Unterlenker nach einem der Ansprüche 17 bis 20 ausgebildet ist und/oder dass der Unterlenker eine Verbindungsstelle für eine Hubspindel nach Anspruch 8 aufweist.

Es könnte ein Bausatz vorgesehen sein, mit welchem ein erfindungsgemäßer Dreipunkt-Geräteanbau nach einem der Ansprüche 1 bis 21 beispielsweise an einem bereits im Betrieb befindlichen Traktor mit einem herkömmlichen Dreipunkt-Geräteanbau zur Verfügung gestellt wird. Dieser Bausatz umfasst eine die traktorseitigen Verbindungsstellen für die Unterlenker zur Verfügung stellende Baugruppe, welche an einem zum Wein- und/oder Obstbau dienenden Traktor anbaubar ist. Weiterhin könnte dieser Bausatz zwei Unterlenker aufweisen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: in einer perspektivischen Ansicht eines Teils des Hecks eines Traktors, welcher ein Ausführungsbeispiel eines erfindungsgemäßen Dreipunkt-Geräteanbaus aufweist,
- Fig. 2: in einer perspektivischen Ansicht des Ausführungsbeispiels aus Figur 1 von unten,
- Fig. 3: in einer Aufsicht ein Ausführungsbeispiel eines Unterlenkers für einen erfindungsgemäßen Dreipunkt-Geräteanbau und
- Fig. 4: in einer Seitenansicht das Ausführungsbeispiel des Unterlenkers aus Figur 3.

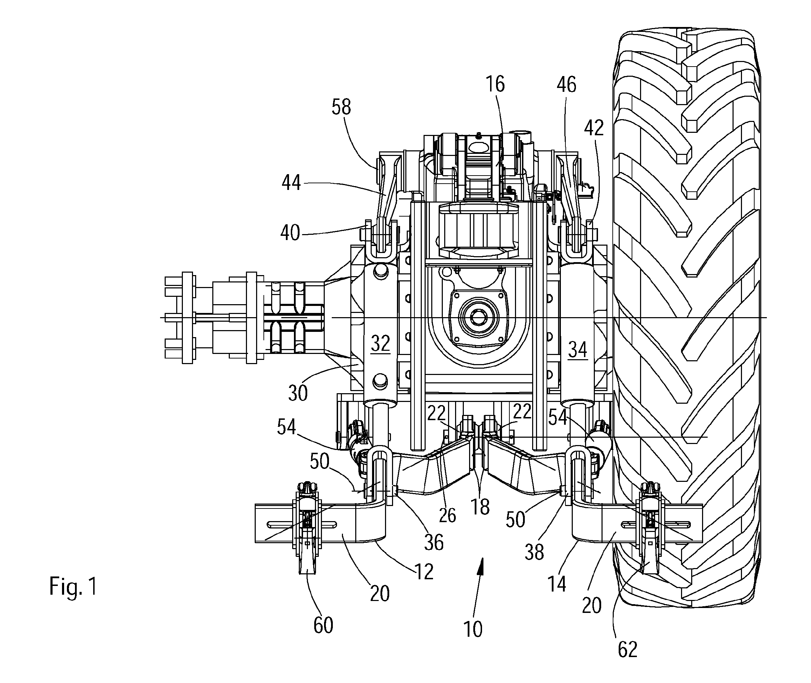

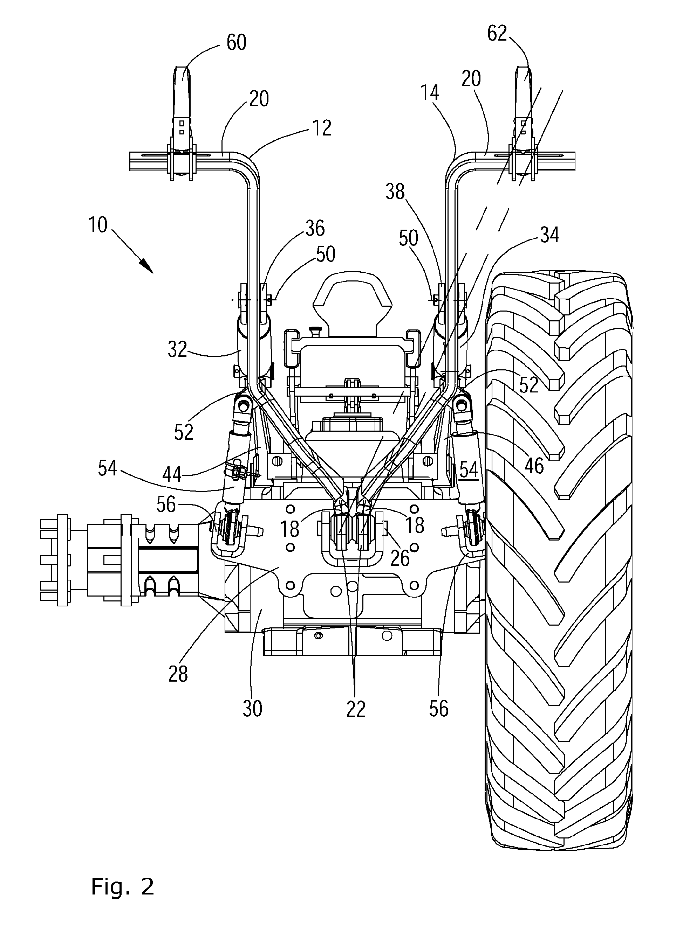

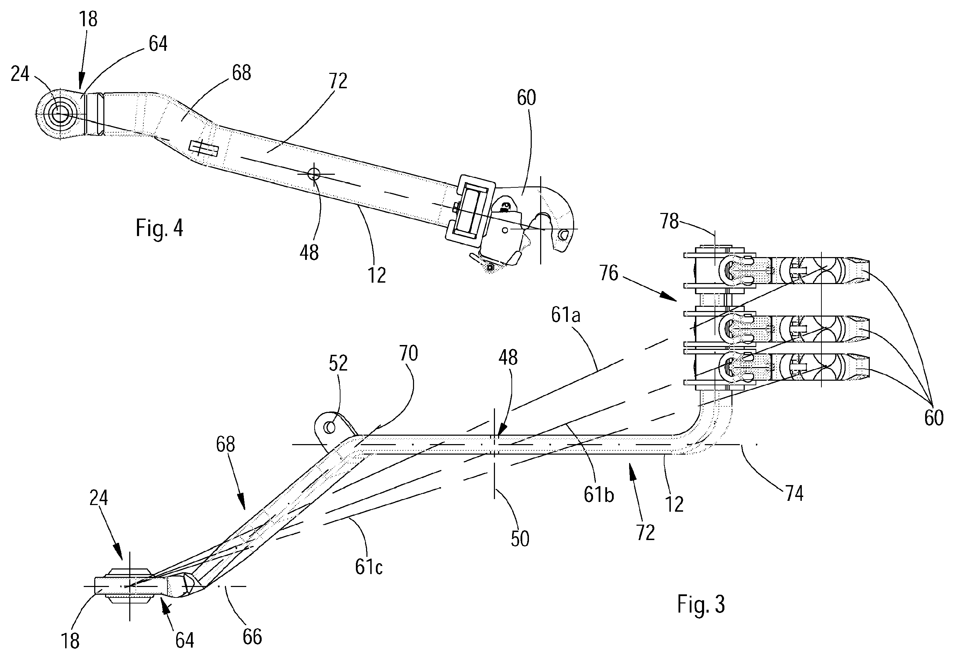

In den Figuren sind gleiche oder ähnliche Bauteile mit den selben Bezugszeichen gekennzeichnet. Der in den Figuren 1 und 2 gezeigte Dreipunkt-Geräteanbau 10 umfasst zwei Unterlenker 12, 14 sowie ein in den Figuren nicht gezeigten Oberlenker. Der Oberlenker ist an einer traktorseitigen Verbindungsstelle 16 gelenkig mit dem Traktor verbunden, wobei die Verbindungsstelle 16 in einem mittleren und oberen Bereich am Heck des Traktors angeordnet ist. Der Unterlenker 12 ist in den Figuren 3 und 4 näher gezeigt. In den Figuren 1 und 2 ist von dem Traktor lediglich das Differenzialgehäuse sowie ein Teil der Hinterachse nebst rechtem Rad gezeigt.

Der Unterlenker 12 weist ein dem Traktor zugewandtes Ende 18 und ein dem Traktor abgewandeltes Ende 20 auf, was auch den Figuren 3 und 4 entnehmbar ist. Dementsprechend sind die zwei Unterlenker 12, 14 mit ihrem dem Traktor zugewandten Ende 18 an den traktorseitigen Verbindungsstellen 22 gelenkig mit dem Traktor verbunden. Die Verbindungsstellen 22 sind hierbei unmittelbar benachbart zueinander angeordnet. Im Konkreten weisen die Unterlenker 12, 14 Ausnehmungen 24 auf, durch welche sich der Bolzen 26 erstreckt, wobei die zwei Unterlenker 12, 14 demgemäß von ein und demselben Bolzen 26 an der traktorseitigen Verbindungsstelle 22 angelenkt sind. Bei dem Bolzen 26 handelt es sich um einen Sensorbolzen, mit welchem die Zugkraft detektierbar ist, die von einem an dem Dreipunkt-Geräteanbau 10 angekoppelten Arbeitsgerät auf die Unterlenker 12, 14 übertragen wird. Die traktorseitigen Verbindungsstellen 16, 22 des - nicht gezeigten - Oberlenkers sowie der Unterlenker 12, 14 ermöglichen eine Kippbewegung des Oberlenkers bzw. der Unterlenker 12, 14 um eine horizontal angeordnete Achse, die für beide Verbindungsstellen 22 durch die Längsachse des Bolzens 26 definiert ist. Bis zu einem gewissen Grad können sowohl der Oberlenker als auch die Unterlenker 12, 14 eine Schwenkbewegung um eine im Wesentlichen vertikal angeordnete Schwenkachse ausführen, die im Fall der Unterlenker 12, 14 an der Verbindungsstelle 22 bzw. am Bolzen 26 angeordnet ist.

In dem in den Figuren 1 und 2 gezeigten Ausführungsbeispiel werden die Verbindungsstellen 22 mit Hilfe der Baugruppe 28 zur Verfügung gestellt, die an der unteren Seite des Differenzialgehäuses 30 anschraubbar ist. Auf Grund der Tatsache, dass die Baugruppe 28 an das Differenzialgehäuse 30 angeschraubt werden kann, ist es in besonders vorteilhafter Weise möglich, Traktoren mit einem herkömmlichen Dreipunkt-Geräteanbau nachträglich umzurüsten, um letztendlich die Funktionalität des erfindungsgemäßen Dreipunkt-Geräteanbaus 10 insbesondere für den Wein- und/oder Obstbau nutzen zu können.

Für jeden Unterlenker 12, 14 ist in dem Ausführungsbeispiel gemäß Figuren 1 und 2 jeweils ein Aktuator 32, 34 vorgesehen, der in Form eines doppelwirkenden Hydraulikzylinders ausgebildet ist und im Prinzip die Funktion einer Hubstrebe aufweist. Der Aktuator 32 bzw. 34 ist mit seinem einen Ende 36 bzw. 38 an dem Unterlenker 12 bzw. 14 und mit seinem anderen Ende 40 bzw. 42 an dem Hubarm 44 bzw. 46 gelenkig verbunden. Die Enden 36, 38, 40, 42 der Aktuatoren 32, 34 sind gabelförmige ausgebildet und jeweils mit einem in den Figuren nicht gezeigten Bolzen mit den Unterlenkern 12, 14 bzw. mit den Hubarmen 44, 46 verbunden.

In Figur 3 und 4 ist die Verbindungsstelle 48 des Unterlenkers 12 für das eine Ende 36 des Aktuators 32 eingezeichnet. Im Konkreten weist die Verbindungsstelle 48 eine Ausnehmung auf, durch welche sich ein Bolzen erstreckt. Somit bildet das angelenkte Ende 36 des Aktuators 32 an der Verbindungsstelle 48 des Unterlenkers 12 eine Gelenkverbindung, mit welcher der Aktuator 32 relativ zum Unterlenker 12 eine Dreh- bzw. Schwenkbewegung um die Achse 50 ausführen kann. Das gabelförmig ausgebildete Ende 36 ist des Weiteren derart bemessen, dass auch bis zu einem gewissen Grad eine Relativbewegung zwischen Unterlenker 12 und Aktuator 32 um eine Achse möglich ist, die im Wesentlichen durch die Längsachse des Unterlenkers 12 am Bereich der Verbindungsstelle 48 definiert ist.

An den Unterlenkern 12, 14 ist jeweils eine Verbindungsstelle 52 vorgesehen, an der jeweils ein - gabelförmig ausgebildetes - Ende eines Stabilisatorelements 54 angelenkt ist. Das Stabilisatorelement 54 ist mit seinem anderen Ende jeweils an der traktorseitigen Verbindungsstelle 56 angelenkt, wobei die traktorseitigen Verbindungsstellen 56 von der Baugruppe 28 zur Verfügung gestellt werden, siehe Fig. 2. Beide Enden des Stabilisatorelements 54 sind jeweils mit einem Bolzen an den entsprechenden Verbindungsstellen 52, 56 gelenkig mit dem Unterlenker 12, 14 bzw. mit der Baugruppe 28 verbunden. Die Stabilisatorelemente 54 sind jeweils in Form eines einzelwirkenden Hydraulikzylinders ausgebildet, wie rechts in Figur 2 gezeigt. Alternativ können die Stabilisatorelemente 54 auch jeweils manuell längenverstellbar ausgebildet sein, wie dies auf der linken Seite in Figur 2 gezeigt ist. Die in Figur 2 unterschiedlich dargestellten Stabilisatorelemente 54 dienen insbesondere der Illustration, dass zwei unterschiedlich ausgebildete Arten von Stabilisatorelementen 54 eingesetzt werden können.

Die Wirkungsweise des erfindungsgemäßen Dreipunkt-Geräteanbaus 10 gemäß Figuren 1 und 2 wird im Folgenden beschrieben:

In dem in Figur 1 gezeigten Zustand des Dreipunkt-Geräteanbaus 10 befinden sich die beiden Unterlenker 12, 14 in einer unteren Stellung. Falls beide Unterlenker 12, 14 gleichermaßen anzuheben sind, erfolgt die ist durch Betätigung der Hubarme 44, 46, die starr bzw. drehfest an der Hubwelle 58 fixiert sind. Die Hubwelle 58 wird von in den Figuren 1 und 2 nicht gezeigten, in dem Gehäuse angeordneten Hubzylindern betätigt. Werden also die Hubarme 44, 46 um die von der Längsachse der Hubwelle 58 definierten Drehachse nach oben gedreht, so werden über die Aktuatoren 32, 34 die beiden Unterlenker 12, 14 ebenfalls nach oben angehoben, wobei hierbei die Aktuatoren 32, 34 in einer unveränderten Längeneinstellung verbleiben. Ein Absenken der Unterlenker 12, 14 erfolgt demgemäß im umgekehrter Richtung. Es ist auch denkbar, die zwei Unterlenker 12, 14 maximal anzuheben, und zwar dadurch, dass die Hubarme 44, 46 in ihre oberste Stellung bewegt werden und zusätzlich die Aktuatoren 32, 34 maximal eingefahren bzw. verkürzt werden.

Es ist weiterhin möglich, den einen Unterlenker (z.B. 12) einzeln abzusenken und den anderen Unterlenker (dann 14) anzuheben. Hierzu wäre der Aktuator 32 auszufahren und der Aktuator 34 einzufahren. Hierdurch kann ein an den Traktor gekoppeltes Arbeitsgerät um eine im Wesentlichen horizontal Achse, die parallel zur Traktorlängsachse orientiert ist, verdreht bzw. verschwenkt werden. Somit kann eine "vertical sloping"-Bewegung des Arbeitsgeräts erzielt werden. Falls das rechte Stabilisatorelement 54 in seiner Länge verändert wird, wird hierdurch der Unterlenker 14 in seiner Lateralposition verändert, wodurch das dem Traktor abgewandte Ende 20 des Unterlenkers 14 von der Traktorlängsebene wegbewegt oder der Traktorlängsebene angenähert werden kann. Hierdurch wird auch der Unterlenker 12 entsprechend bewegt, da auch dessen dem Traktor abgewandtes Ende 20 mit einem in den Figuren nicht gezeigten angekoppelten Arbeitsgerät verbunden ist, so dass hierdurch der Abstand der Enden 20 der Unterlenker 12, 14 unverändert bleibt. Demgemäß kann durch Betätigung des oder der Stabilisatorelemente 54 eine "lateral sway"-Bewegung ausgeführt werden, und ein an den Traktor angekoppeltes Arbeitsgerät kann hierdurch entweder einer links oder einer rechts vom Traktor angeordneten Obstbaureihe seitlich angenähert bzw. hingeschwenkt werden. Die "lateral sway"-Bewegung des Arbeitsgeräts erfolgt hierbei um eine im Wesentlichen vertikal angeordnete Schwenkachse, die im Bereich der traktorseitigen Verbindungsstellen 22 angeordnet ist.

Zum Ankoppeln eines Arbeitsgeräts an den Unterlenkern 12, 14 sind Fanghaken im 60, 62 vorgesehen, die in verschiedenen Querpositionen am Unterlenker 12 bzw. 14 fixierbar sind. In Figur 3 sind jeweils drei Fanghaken 60 gezeigt, um zum Ausdruck zu bringen, dass der Fanghaken 60 in unterschiedlichen Positionen fixierbar ist. Diese Positionen deuten ein Spreizmaß an, welches einem Anbaugerät der Kategorie 1, 2 bzw. kleiner als 1 entspricht. Die Auswirkung der unterschiedlichen Positionen des Fanghakens 60 auf die Verbindungsstelle 48 des Unterlenkers 12 ist mit den Verbindungslinien 61a bis 61c gezeigt. Dementsprechend ist bezüglich der mittleren Position des Fanghakens 60 die Verbindungsstelle 48 genau im Schnittpunkt zwischen der Längsachse 74 des Unterlenkers 12 und der Verbindungslinie 61b angeordnet. Bezüglich der anderen beiden Positionen des Fanghakens 60 existiert auf der Höhe der Verbindungsstelle 48 bzw. in Richtung der Achse 50 kein Schnittpunkt zwischen den Verbindungslinien 61a, 61c und der Längsachse 74 dieses Bereichs des Unterlenkers 12. Allerdings sind die Schnittpunkte zwischen den Verbindungslinien in 61a, 61c und der Achse 50 nicht weit vom Unterlenker 12 beabstandet. Insoweit wird auch in die Hubstreben ein Drehmoment eingeleitet, falls die Fanghaken 60 in den in Fig. 3 gezeigten beiden äußeren Positionen angeordnet sind. Dieses Drehmoment ist jedoch gering verglichen zu dem Drehmoment, das bei herkömmlichen Dreipunkt-Geräteanbauten in die Hubstreben eingeleitet wird, da dort der Abstand zwischen den entsprechenden Verbindungslinien von traktorseitiger und arbeitsgeräteseitiger Verbindungsstelle in einer der Achse 50 aus Figur 3 vergleichbaren Richtung größer ist.

In Figur 3 ist eine Aufsicht des Unterlenkers 12 gezeigt, auf welche im Folgenden etwas näher eingegangen wird. So weist der Unterlenker 12 in seinem dem Traktor zugewandten Ende 18 einen ersten Bereich 64 mit einer ersten Längsachse 66 auf. Der erste Bereich 64 bzw. die Längsachse 66 ist im am Traktor angebauten Zustand im wesentlichen parallel zur Traktorlängsebene orientiert. An den ersten Bereich 64 des Unterlenkers 12 schließt sich ein zweiter Bereich 68 mit einer zweiten Längsachse 70 des Unterlenkers 12 an. Die erste Längsachse 66 und die zweite Längsachse 70 sind in einem Winkel zueinander angeordnet, und zwar derart, dass im angebauten Zustand der beiden Unterlenker 12, 14 bezüglich der traktorseitigen Verbindungsstelle 22 die zweiten Bereiche 68 der beiden Unterlenker 12, 14 divergieren, was beispielsweise Figur 2 deutlich entnehmbar ist.

An den zweiten Bereich 68 des Unterlenkers 12 schließt sich ein dritter Bereich 72 des Unterlenkers 12 mit einer dritten Längsachse 74 an. Der dritte Bereich 72 ist im am Traktor angebauten Zustand im wesentlichen parallel zur Traktorlängsebene orientiert. Figur 2 ist entnehmbar, dass die beiden dritten Bereiche 72 der Unterlenker 12, 14 im Wesentlichen parallel zueinander angeordnet sind.

An den dritten Bereich 72 des Unterlenkers 12 schließt sich ein vierter Bereich 76 des Unterlenkers mit einer vierten Längsachse 78 an. Der vierte Bereich 76 des Unterlenkers 12 ist derart ausgebildet, dass im am Traktor angebauten Zustand des Unterlenkers 12 die weitere Längsachse 78 im Wesentlichen quer und im Wesentlichen horizontal zur Traktorlängsachse orientiert ist. An dem Bereich 76 ist der Fanghaken 60 befestigbar, der in Richtung der Längsachse 78 an verschiedenen Positionen fixiert werden, was in Figur 3 mit drei unterschiedlichen Positionen gezeigt ist.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Dreipunkt-Geräteanbau für einen zum Wein- und/oder Obstbau dienenden Traktor, mit einem Oberlenker und zwei Unterlenkern (12, 14), wobei ein Ende des Oberlenkers an einem oberen mittleren Bereich des Dreipunkt-Geräteanbaus (10) gelenkig an einer traktorseitigen Verbindungsstelle (16) mit dem Traktor verbunden ist und wobei ein Ende (18, 64) eines Unterlenkers (12, 14) an einem unteren Bereich des Dreipunkt-Geräteanbaus an einer traktorseitigen Verbindungsstelle (22) gelenkig mit dem Traktor verbunden ist,
**dadurch gekennzeichnet, dass** die beiden traktorseitigen Verbindungsstellen (22) der Unterlenker (12, 14) in räumlicher Nähe beieinander angeordnet sind und dass der Abstand der traktorseitigen Verbindungsstellen (22) der Unterlenker (12, 14) derart gewählt ist, dass der horizontale Konvergenzabstand einen vorgebbaren Wert aufweist, bei welchem einerseits ein seitliches Ausschwenken eines am Traktor angekoppelten Arbeitgeräts möglich ist und andererseits eine vorgebbare seitliche Führung des Arbeitgeräts vorliegt.

2. Dreipunkt-Geräteanbau nach Anspruch 1, **dadurch gekennzeichnet, dass** der Abstand der traktorseitigen Verbindungsstellen (22) der Unterlenker (12, 14) nicht größer als 20% des Radabstands des Traktors ist, vorzugsweise beträgt der Abstand der traktorseitigen Verbindungsstellen (22) der Unterlenker (12, 14) im Wesentlichen 10% des Radabstands des Traktors.

3. Dreipunkt-Geräteanbau nach Anspruch 1 oder 2, **dadurch gekennzeichnet, dass** die traktorseitigen Verbindungsstellen (22) der Unterlenker (12, 14) in einem Bereich nahe der Traktorlängsebene und/oder an einem Rahmen- oder Gehäuseteil (30) des Traktors an einem unteren Bereich angeordnet sind, vorzugsweise nahe der Traktorachse, insbesondere nahe der Hinterachse.

4. Dreipunkt-Geräteanbau nach einem der Ansprüche 1 bis 3, **dadurch gekennzeichnet, dass** mindestens ein Aktuator (32, 34) vorgesehen ist, mit welchem die räumlichen Ausrichtung der zwei Unterlenker (12, 14) veränderbar ist, und dass vorzugsweise jedem Unterlenker (12, 14) ein Aktuator (32, 34) zugeordnet ist, mit welchem der jeweilige Unterlenker (12, 14) unabhängig von dem anderen Unterlenker (14, 12) in seiner räumlichen Ausrichtung veränderbar ist.

5. Dreipunkt-Geräteanbau nach einem der Ansprüche 1 bis 4, **dadurch gekennzeichnet, dass** an jedem Unterlenker (12, 14) eine Verbindungsstelle (48) für eine Hubstrebe (32, 34) vorgesehen ist, welche derart ausgebildet ist, dass zwischen Hubstrebe (32, 34) und Unterlenker (12, 14) eine Gelenkverbindung gebildet ist, welche eine Drehbewegung des Unterlenkers (12, 14) relativ zur Hubstrebe (32, 34) um eine Drehachse quer zur Unterlenkerlängsachse ermöglicht und welche auch eine weitere Drehbewegung um die Unterlenkerlängsachse des Unterlenkers (12, 14) relativ zur Hubstrebe (32, 34) ermöglichen könnte.

6. Dreipunkt-Geräteanbau nach Anspruch 5, **dadurch gekennzeichnet, dass** traktorseitig ein Hubarm (44, 46) mit mindestens einer Verbindungsstelle für eine Hubstrebe (32, 34) vorgesehen ist, dass eine Hubstrebe (32, 34) mit ihrem einen Ende an einer Verbindungsstelle des Hubarms (44, 46) und mit ihrem anderen Ende an einer Verbindungsstelle (48) für die Hubstrebe (32, 34) eines Unterlenkers (12, 14) angelenkt ist, wobei der Hubarm (44, 46) mit mindestens einem - insbesondere in Form eines Hydraulikzylinders ausgebildeten - Aktuator bewegbar ist.

7. Dreipunkt-Geräteanbau nach Anspruch 5 oder 6, **dadurch gekennzeichnet, dass** die für eine Hubstrebe (32, 34) vorgesehene Verbindungsstelle (48) eines Unterlenkers (12, 14) im Wesentlichen dort am Unterlenker (12, 14) angeordnet ist, wo die Verbindungslinie (61a, 61b, 61c) zwischen der traktorseitigen Verbindungsstelle (22) des Unterlenkers (12, 14) und einer Ankopplungsstelle (60) des Unterlenkers (12, 14) für ein Arbeitsgerät verläuft.

8. Dreipunkt-Geräteanbau nach einem der Ansprüche 5 bis 7, **dadurch gekennzeichnet, dass** mindestens eine Hubstrebe (32, 34) längenverstellbar ausgeführt ist, vorzugsweise motorisch oder druckmittelbetrieben, insbesondere in Form eines Hydraulikzylinders.

9. Dreipunkt-Geräteanbau nach einem der Ansprüche 5 bis 8, **dadurch gekennzeichnet, dass** als Hubstrebe für einen Unterlenker ein doppelwirkender Aktuator vorgesehen ist und dass für den anderen Unterlenker eine - starre oder manuell in ihrer Länge verstellbare - Hubstrebe vorgesehen ist.

10. Dreipunkt-Geräteanbau nach einem der Ansprüche 5 bis 8, **dadurch gekennzeichnet, dass** als Hubstrebe für jeden Unterlenker ein einfachwirkender Aktuator/Hydraulikzylinder vorgesehen ist.

11. Dreipunkt-Geräteanbau nach einem der Ansprüche 5 bis 8, **dadurch gekennzeichnet, dass** als Hubstrebe (32, 34) für jeden Unterlenker (12, 14) ein dopplewirkender Aktuator/Hydraulikzylinder vorgesehen ist.

12. Dreipunkt-Geräteanbau nach einem der Ansprüche 1 bis 11, **dadurch gekennzeichnet, dass** mindestens ein längenverstellbares - vorzugsweise motorisch oder druckmittelbetriebenes - Stabilisatorelement (54) vorgesehen ist, welches einenends an einer traktorseitigen Verbindungsstelle (56) und welches anderenends an einer Verbindungsstelle (52) an einem Unterlenker (12, 14) anordenbar ist.

13. Dreipunkt-Geräteanbau nach Anspruch 12, **dadurch gekennzeichnet, dass** einem Unterlenker (12, 14) ein Stabilisatorelement zugeordnet ist, welches einen doppelwirkenden Hydraulikzylinder aufweist, oder dass jedem Unterlenker (12, 14) jeweils ein - vorzugsweise einfachwirkend ausgebildetes - Stabilisatorelement (54) zugeordnet ist.

14. Dreipunkt-Geräteanbau nach einem der Ansprüche 1 bis 13, **dadurch gekennzeichnet, dass** eine traktorseitige Verbindungsstelle (16, 22) eines Unterlenkers (12, 14) und/oder eines Oberlenkers eine Gelenkverbindung mit mindestens zwei Freiheitsgraden aufweist, mit welcher beispielsweise eine Kippbewegung des Unterlenkers (12, 14) bzw. des Oberlenkers um eine im Wesentlichen horizontal angeordnete Kippachse und eine Schwenkbewegung des Unterlenkers (12, 14) bzw. des Oberlenkers um eine im Wesentlichen vertikal angeordnete Schwenkachse ausführbar ist.

15. Dreipunkt-Geräteanbau, der am Heck des Traktors angeordnet ist, nach einem der Ansprüche 1 bis 14, **dadurch gekennzeichnet, dass** die traktorseitigen Verbindungsstellen (22) der Unterlenker (12, 14) bezüglich der Traktorlängsachse weiter vorne angeordnet sind als die traktorseitige Verbindungsstelle (16) des Oberlenkers.

16. Dreipunkt-Geräteanbau nach einem der Ansprüche 1 bis 15, **dadurch gekennzeichnet, dass** ein Unterlenker (12, 14) in seinem dem Traktor zugewandten Ende (18) einen ersten Bereich (64) mit einer ersten Längsachse (66) aufweist, welcher im am Traktor angebauten Zustand im Wesentlichen parallel zur Traktorlängsebene orientiert ist.

17. Dreipunkt-Geräteanbau nach Anspruch 16, **dadurch gekennzeichnet, dass** an den ersten Bereich (64) des Unterlenkers (12, 14) sich ein zweiter Bereich (68) mit einer zweiten Längsachse (70) des Unterlenkers (12, 14) anschließt und dass die erste Längsachse (66) und die zweiten Längsachse (70) in einem Winkel zueinander angeordnet sind, vorzugsweise derart, dass im angebauten Zustand der beiden Unterlenker (12, 14) bezüglich der traktorseitigen Verbindungsstelle (22) die zweiten Bereiche (68) der beiden Unterlenker (12, 14) divergieren.

18. Dreipunkt-Geräteanbau nach Anspruch 17, **dadurch gekennzeichnet, dass** an den zweiten Bereich (68) des Unterlenkers (12, 14) sich ein dritter Bereich (72) des Unterlenkers (12, 14) mit einer dritten Längsachse (74) anschließt, welcher im am Traktor angebauten Zustand im Wesentlichen parallel zur Traktorlängsebene orientiert ist.

19. Dreipunkt-Geräteanbau nach Anspruch 17 oder 18, **dadurch gekennzeichnet, dass** an den zweiten oder dritten Bereich (68, 72) des Unterlenkers (12, 14) sich ein weiterer Bereich (76) des Unterlenkers (12, 14) mit einer weiteren Längsachse (78) anschließt, und dass der weitere Bereich (76) des Unterlenkers (12, 14) derart ausgebildet ist, dass im am Traktor angebauten Zustand des Unterlenkers (12, 14) die weitere Längsachse (78) im Wesentlichen quer - und vorzugsweise im Wesentlichen horizontal - zur Traktorlängsachse orientiert ist.

20. Dreipunkt-Geräteanbau nach einem der Ansprüche 1 bis 19, **dadurch gekennzeichnet, dass** arbeitsgeräteseitige Schnittstellenmittel (60) vorgesehen sind, die derart ausgebildet sind, dass sie auf verschiedene Anbaugerätekategorien anpassbar sind.

21. Unterlenker für einen Dreipunkt-Geräteanbau nach einem der Ansprüche 1 bis 20, **dadurch gekennzeichnet, dass** der Unterlenker (12, 14) nach einem der Ansprüche 16 bis 19 ausgebildet ist und dass der Unterlenker (12, 14) eine Verbindungsstelle (48) für eine Hubspindel (32, 34) nach Anspruch 7 aufweist.

22. Bausatz zum zur Verfügung stellen eines Dreipunkt-Geräteanbaus nach einem der Ansprüche 1 bis 20, **gekennzeichnet durch** eine die traktorseitigen Verbindungsstellen (22) für die Unterlenker (12, 14) zur Verfügung stellende Baugruppe (28), welche an einem zum Wein- und/oder Obstbau dienenden Traktor anbaubar ist, und insbesondere **gekennzeichnet durch** zwei Unterlenker (12, 14).
